# FASCICULE DE BREVET EUROPEEN

(11) **EP 2 739 444 B1**
(45) Date de publication et mention de la délivrance du brevet: **04.05.2016**
(21) Numéro de dépôt: 12750455.3
(22) Date de dépôt: 31.07.2012
(51) Int. Cl.: B26D 7/00, B26B 29/06

(54) **DISPOSITIF POUR L'AIDE A LA DÉCOUPE D'UNE COUCHE DE TEXTURE FIBREUSE ENROULÉE SUR UN MANDRIN D'IMPRÉGNATION D'UNE MACHINE D'ENROULEMENT**
HILFSVORRICHTUNG FÜR DAS SCHNEIDEN EINER FASERHALTIGEN SCHICHT AUF EINEM IMPREGNIERDORN GEWICKELT, IN EINER WICKELMASCHINE
DEVICE FOR HELPING THE CUT OF A LAYER WITH FIBROUS TEXTURE ON AN IMPREGNATION BARREL OF A WINDING MACHINE

(30) Priorité: 04.08.2011 FR 1157146
(43) Date de publication de la demande: 11.06.2014
(73) Titulaire: SNECMA, 75015 Paris (FR)
(72) Inventeur: MATHON, Richard, F-77550 Moissy-Cramayel Cedex (FR); PHELIPPEAU, Antoine, F-77550 Moissy-Cramayel Cedex (FR); GUMMEL, Micah, East Kingston, New Hampshire 03827 (US)
(74) Mandataire: Boura, Olivier
(86) Numéro de dépôt international: PCT/FR2012/051803
(87) Numéro de publication internationale: WO 2013/017796

(56) Documents cités:
- EP-A2- 1 961 923
- WO-A1-2006/060270
- US-A- 5 946 999

## Description

### Arrière-plan de l'invention

La présente invention se rapporte au domaine général de la réalisation de carters de turbine à gaz en matériau composite, et plus particulièrement de carters de rétention pour soufflante de turbine à gaz pour moteurs aéronautiques.

Dans un moteur aéronautique à turbine à gaz, un carter de soufflante remplit plusieurs fonctions : il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce dernier constitue un piège retenant les débris, tels que des objets ingérés ou des fragments d'aubes endommagées, projetés par la centrifugation, afin d'éviter qu'ils traversent le carter et atteignent d'autres parties de l'aéronef.

De façon courante, un carter de rétention de soufflante est formé par une paroi relativement mince définissant la veine d'entrée d'air et supportant un matériau abradable au droit de la trajectoire des sommets des aubes de soufflante et le revêtement de traitement acoustique éventuel, et par une structure de bouclier fixé sur cette paroi du côté extérieur, au niveau de la soufflante.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Plus précisément, ce document prévoit d'utiliser un mandrin d'appel pour le tissage tridimensionnel de la texture fibreuse, celle-ci étant ensuite enroulée en couches superposées sur un mandrin d'imprégnation présentant une surface extérieure dont le profil correspond à celui de la partie centrale du carter à fabriquer et deux flasques latéraux correspondant à des brides de fixation du carter. La préforme fibreuse ainsi obtenue est maintenue sur le mandrin d'imprégnation et une imprégnation par résine est réalisée avant polymérisation.

La mise en oeuvre pratique de ce procédé pose le problème du transfert de la texture fibreuse depuis le mandrin d'appel vers le mandrin d'imprégnation. Pour résoudre ce problème, la Demanderesse a proposé dans WO-A-2012140355 une machine d'enroulement permettant d'assurer, lors du transfert de la texture fibreuse depuis le mandrin d'appel vers le mandrin d'imprégnation, à la fois un placement correct de la texture fibreuse sur le mandrin d'imprégnation et l'application d'une tension d'enroulement adéquate.

Avec une telle machine, se pose le problème de la découpe de la texture fibreuse en fin d'enroulement. En effet, cette opération nécessite un positionnement très précis de l'outil de coupe afin d'éviter toute imprécision de découpe qui aurait pour conséquence de créer localement, soit une zone trop riche en fibres (en cas de découpe trop longue), soit une zone trop riche en résine (en cas de découpe trop courte). US 5,946,999 décrit une plaque avec une fente formant un gabarit de découpe.

### Objet et résumé de l'invention

La présente invention a donc pour but principal de répondre à un tel problème en proposant un dispositif pour l'aide à la découpe de la préforme en fin d'enroulement qui assure une grande maîtrise de la position de découpe.

Conformément à l'invention, ce but est atteint grâce à un dispositif pour l'aide à la découpe d'une couche de texture fibreuse enroulée sur un mandrin d'imprégnation d'une machine d'enroulement, comprenant deux cales de positionnement qui sont destinées à être chacune positionnées sur un flasque latéral du mandrin d'imprégnation, et une plaque formant gabarit de découpe qui est positionnée sur les cales de positionnement et qui est destinée à être positionnée sur la couche de texture fibreuse à découper au niveau du film de protection, ladite plaque étant munie d'une fente s'étendant en position entre les flasques latéraux du mandrin d'imprégnation et destinée à assurer un guidage d'un outil de coupe.

Le dispositif selon l'invention présente de nombreux avantages. En particulier, il permet d'assurer un positionnement parfaitement précis de la découpe afin d'éviter toute risque de créer localement une zone trop riche en fibres ou en résine. De plus, cette opération de découpe peut être réalisée en limitant autant que possible les manipulations de la préforme afin de réduire les déformations de celle-ci. Au final, le temps pour l'exécution de cette opération peut être considérablement réduit.

De préférence, les cales de positionnement sont reliées entre elles par un film de protection destiné à être positionné sous la couche de texture fibreuse à découper. La présence du film de protection sous la couche de texture fibreuse à découper permet ainsi d'éviter toute dégradation de la préforme lors de l'opération de découpe.

Le film de protection peut être réalisé dans une matière plastique souple. En particulier, le film de protection peut être réalisé en polyamide et posséder une épaisseur de l'ordre de 3mm environ.

De préférence également, le dispositif comporte en outre des moyens de maintien en position des cales de positionnement sur les flasques latéraux du mandrin d'imprégnation. De tels moyens permettent notamment de pouvoir pré-positionner le dispositif avant la fin de l'enroulement. Il en résulte un gain de temps pour l'opération de découpe.

La plaque peut être apte à être positionnée à chacune de ses extrémités sur les cales de positionnement. Dans ce cas, le dispositif comporte avantageusement des moyens de réglage de la position des extrémités de la plaque sur les cales de positionnement. De tels moyens permettent d'affiner le positionnement de la fente de la plaque sur la couche de texture fibreuse à découper, et donc de l'endroit où sera pratiquée la découpe.

Les cales de positionnement peuvent être rigides. En particulier, les cales de positionnement peuvent être réalisées en aluminium.

L'invention a également pour objet une machine d'enroulement d'une texture fibreuse sur un mandrin d'imprégnation, comprenant un mandrin d'appel sur lequel est destiné à être stockée une texture fibreuse obtenue par tissage tridimensionnel, le mandrin d'appel ayant un axe de rotation sensiblement horizontal, un mandrin d'imprégnation sur lequel est destinée à être enroulée en couches superposées la texture fibreuse stockée sur le mandrin d'appel, le mandrin d'imprégnation ayant un axe de rotation sensiblement horizontal et parallèle à l'axe de rotation du mandrin d'appel, au moins un moteur électrique pour entraîner en rotation les mandrins autour de leur axe de rotation respectif, une unité de commande du ou des moteurs électriques d'entraînement en rotation des mandrins, et un dispositif pour l'aide à la découpe d'une couche de la texture fibreuse tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue de côté d'une machine d'enroulement d'une texture fibreuse sur un mandrin d'imprégnation comprenant un dispositif pour l'aide à la découpe selon l'invention ;
- la figure 2 est une vue selon II de la figure 1 montrant plus précisément une partie du dispositif pour l'aide à la découpe ;
- la figure 3 est une en coupe selon III-III de la figure 2 ;
- la figure 4 est une vue du mandrin d'imprégnation en fin d'enroulement préalablement à l'opération de découpe ;
- la figure 5 est une vue selon V de la figure 4 montrant le dispositif pour l'aide à la découpe ;
- la figure 6 est une vue selon VI de la figure 5 ; et
- la figure 7 est une vue en coupe selon VII-VII de la figure 5.

### Description détaillée de l'invention

L'invention sera décrite ci-après dans le cadre de son application à la fabrication d'un carter de soufflante de moteur aéronautique à turbine à gaz.

Un exemple de procédé de fabrication d'un tel carter de soufflante est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans ce document consiste à réaliser une texture fibreuse par tissage tridimensionnel avec appel en chaîne sur un tambour (appelé ci-après mandrin d'appel) ayant un profil déterminé en fonction du profil du carter à fabriquer.

La texture fibreuse ainsi réalisée est ensuite transférée sur le mandrin d'un moule d'injection de résine (ci-après appelé mandrin d'imprégnation) dont le profil extérieur correspond au profil interne du carter à fabriquer.

La préforme étant maintenue sur le mandrin d'imprégnation, une imprégnation est alors réalisée par une résine. A cet effet, une enveloppe est appliquée sur la préforme et la résine est injectée dans le moule ainsi constitué. L'imprégnation peut être assistée par établissement d'une différence de pression entre l'intérieur et l'extérieur du moule dans lequel se trouve la préforme. Après imprégnation, une étape de polymérisation de la résine est réalisée.

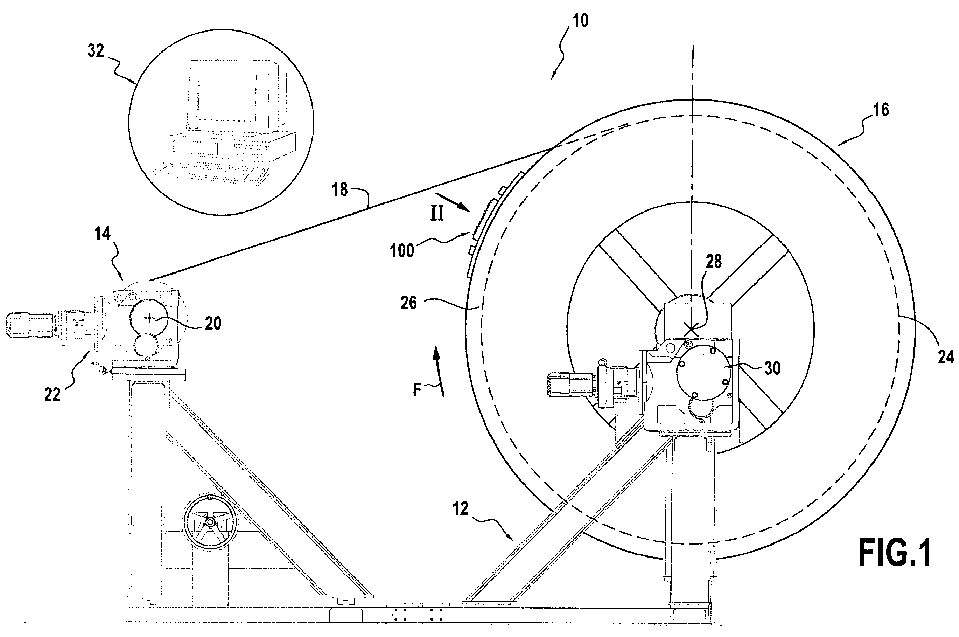

L'invention s'applique à tout type de machine d'enroulement ayant pour fonction de permettre un transfert automatisé de la texture fibreuse stockée sur le mandrin d'appel vers le mandrin d'imprégnation du moule d'injection de résine, telle que celle représentée sur la figure 1.

On pourra se référer à WO-A-2012140355 qui décrit en détails la structure et le fonctionnement d'une telle machine.

Brièvement, la machine d'enroulement 10 comprend un bâti 12 supportant notamment un mandrin d'appel 14 et un mandrin d'imprégnation 16. Ces mandrins sont amovibles, c'est-à-dire qu'ils peuvent être démontés du bâti.

Le mandrin d'appel 14 reçoit la texture fibreuse 18 obtenue par exemple par tissage tridimensionnel. Il est porté par un axe horizontal 20 dont une extrémité est montée de façon rotative sur le bâti 12 de la machine d'enroulement et l'autre extrémité est couplée à l'arbre de sortie d'un moteur électrique 22, par exemple un motoréducteur électrique à courant alternatif.

L'ensemble constitué du mandrin d'appel 14, de son axe 20 et de son moteur électrique 22 peuvent translater par rapport au bâti le long de l'axe de rotation du mandrin d'appel. Ce degré de liberté en translation du mandrin d'appel permet de réaliser un alignement de ce mandrin sur le mandrin d'imprégnation préalablement à l'enroulement de la texture fibreuse sur le mandrin d'imprégnation.

Le mandrin d'imprégnation 16 de la machine d'enroulement est destiné à recevoir en couches superposées la texture fibreuse stockée sur le mandrin d'appel. Il présente une surface extérieure 24 dont le profil correspond à celui de la surface interne du carter à réaliser et deux flasques latéraux 26 dont les profils correspondent à ceux des brides externes du carter à ses extrémités amont et aval afin de permettre son montage et sa liaison avec d'autres éléments.

Le mandrin d'imprégnation est porté par un axe horizontal 28 qui est parallèle à l'axe de rotation 20 du mandrin d'appel et dont l'une extrémité est montée de façon rotative sur le bâti 12 de la machine d'enroulement et l'autre extrémité est couplée à l'arbre de sortie d'un moteur électrique 30, par exemple un motoréducteur électrique à courant alternatif.

Une unité de commande 32 est reliée aux moteurs électriques 22, 30 des deux mandrins et permet de commander et contrôler de la vitesse de rotation de chaque mandrin. De manière plus générale, cette unité de commande permet de piloter l'ensemble des paramètres de fonctionnement de la machine d'enroulement, et notamment le déplacement en translation du mandrin d'appel lorsque celui-ci est motorisé.

Avec une telle machine, l'enroulement de la texture fibreuse sur le mandrin d'imprégnation s'effectue de la façon suivante : l'extrémité libre de la texture fibreuse du mandrin d'appel est d'abord fixée sur le mandrin d'imprégnation au moyen d'un ou plusieurs dispositifs de maintien décrits ci-après, puis les moteurs d'entraînement en rotation des mandrins sont activés et pilotés par l'unité de commande de façon à appliquer une tension d'enroulement adéquate sur la texture fibreuse.

L'enroulement de la texture fibreuse sur le mandrin d'imprégnation peut alors débuter et s'effectue selon le sens de rotation repéré par la flèche F sur la figure 1. A titre d'exemple, il pourra être nécessaire de réaliser 4 tours 1/8 pour obtenir une préforme de carter ayant une épaisseur conforme aux spécifications.

La figure 1 représente la configuration du mandrin d'imprégnation juste avant la fin de l'enroulement. Dans cette configuration, une partie du dispositif d'aide à la découpe 100 conforme à l'invention est montée sur le mandrin d'imprégnation 16.

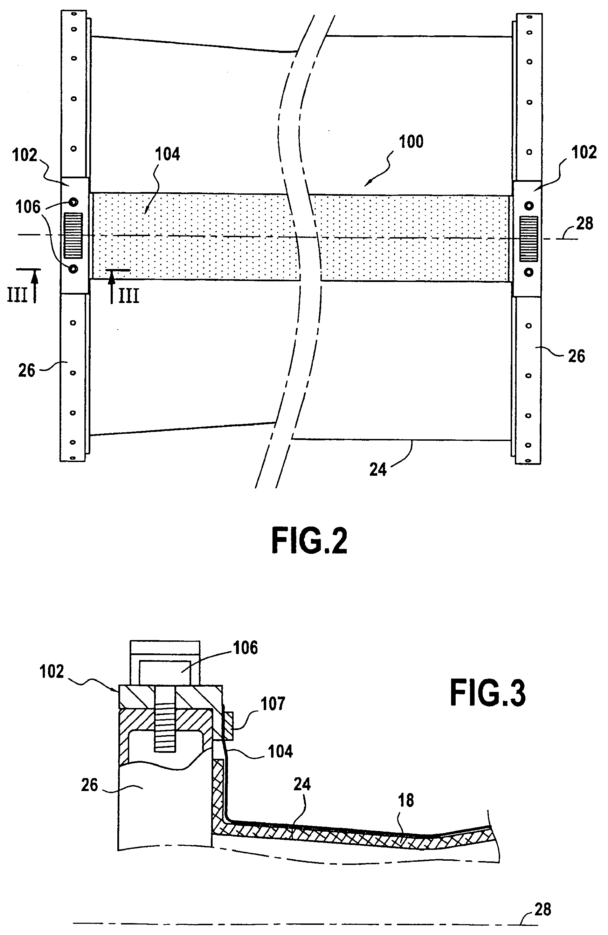

De façon plus précise comme représenté sur les figures 2 et 3, le dispositif d'aide à la découpe 100 comprend notamment deux cales de positionnement 102 qui sont chacune positionnées sur l'un des flasques latéraux 26 du mandrin d'imprégnation et qui sont reliées entre elles par un film de protection 104.

Plus précisément, les cales de positionnement 102 sont positionnées sur les flasques latéraux du mandrin d'imprégnation à un endroit spécifique et sont ensuite maintenues en position, par exemple au moyen de systèmes 106 de type vis/écrou.

Ces cales de positionnement 106 sont réalisées dans un matériau rigide. Pour des raisons de gain de masse, elles peuvent par exemple être réalisées en aluminium anodisé.

Le film de protection 104 se présente sous la forme d'une feuille souple de matière plastique (par exemple à base de polyamide) sensiblement rectangulaire qui est fixée à chacune de ses extrémités sur les cales de positionnement, par exemple au moyen de rivets 107. Ainsi, ce film de protection qui est une pièce d'usure est aisément remplaçable.

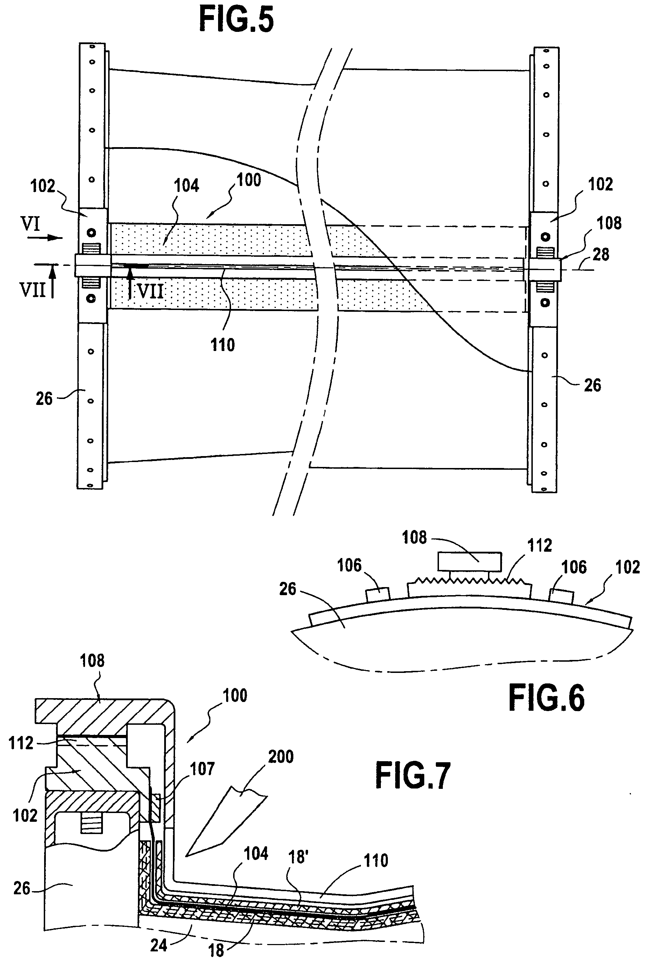

En position sur le mandrin d'imprégnation, ce film de protection s'étend parallèlement à l'axe de rotation 28 de celui-ci sur toute sa largeur. Par ailleurs, il est positionné sur la dernière couche de texture fibreuse 18 enroulée sur le mandrin d'imprégnation et se trouvera donc en fin d'enroulement sous la couche de texture fibreuse à découper 18' (voir la figure 7).

On notera en particulier que ce film de protection recouvre la dernière couche de texture fibreuse 18 enroulée sur le mandrin d'imprégnation, non seulement au niveau de sa partie enroulée sur la surface extérieure 24 du mandrin, mais également au niveau des coins formés entre la surface extérieure et les flasques latéraux du mandrin d'imprégnation.

Ainsi, lorsque positionné sur le mandrin d'imprégnation, le film de protection 104 permettra de protéger la couche de texture fibreuse située en dessous lors de l'opération de découpe. A cet effet, l'épaisseur de ce film de protection dépendra en partie de l'outil utilisé pour réaliser la coupe. Par exemple, si un outil de coupe 200 du type cutter est utilisé manuellement, une épaisseur de l'ordre de 3mm devrait être suffisante.

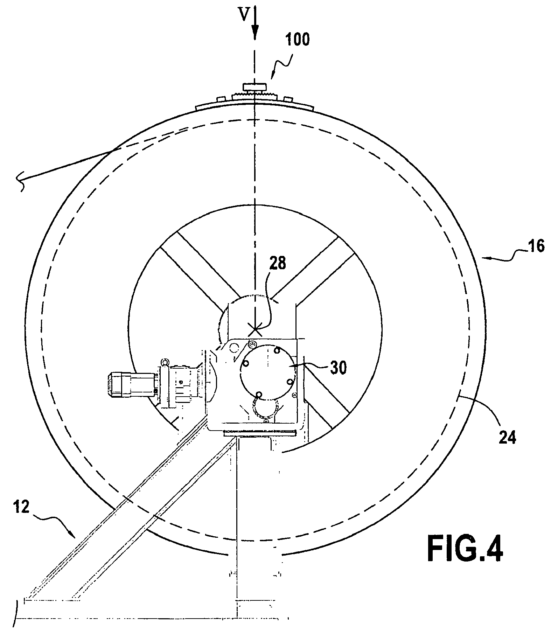

Une fois les cales de positionnement 106 fixées sur les flasques latéraux du mandrin d'imprégnation avec le film de protection posé sur la dernière couche de texture fibreuse, le mandrin d'imprégnation est pivoté autour de son axe de rotation 28 pour amener le dispositif d'aide à la découpe 100 à une position angulaire correspondant à midi (voir la figure 4). A titre d'exemple, un huitième de tour peut être nécessaire par rapport à la configuration de la figure 1.

Dans cette position, comme représenté sur les figures 5 à 7, une plaque 108 appartenant au dispositif d'aide à la découpe 100 et formant gabarit de découpe est positionnée sur la couche de texture fibreuse à découper 18' au niveau du film-de protection 104.

De façon plus précise, cette plaque 108 est par exemple une tôle rigide métallique ayant une forme sensiblement rectangulaire dont les deux extrémités sont positionnées sur les cales de positionnement 102. La plaque comporte une fente 110 qui s'étend entre ses deux extrémités et dont les dimensions (largeur) sont adaptées pour permettre un passage de l'outil de coupe 200.

Lorsque positionnée sur les cales de positionnement, la plaque 108 s'étend parallèlement à l'axe de rotation 28 du mandrin d'imprégnation sur toute la largeur de celui-ci. Elle est positionnée sur la couche de texture fibreuse 18' à découper.

On notera que la fente 110 pour le guidage de l'outil de coupe 200 se retrouve ainsi en regard de la couche de texture fibreuse 18' à découper, non seulement au niveau de sa partie enroulée sur la surface extérieure du mandrin, mais également au niveau des coins formés entre la surface extérieure les flasques latéraux du mandrin d'imprégnation.

De façon avantageuse, il est prévu des moyens de réglage de la position des extrémités de la plaque 108 sur les cales de positionnement 102. Par exemple, comme représenté sur la figure 6, ces moyens de réglage peuvent prendre la forme de dents 112 de formes complémentaires et formées sur des surfaces en regard des cales de positionnement et des extrémités de la plaque.

De la sorte, il est possible d'affiner le positionnement de la plaque 108 formant gabarit de découpe, et donc de la fente 110 de guidage de l'outil de coupe 200, sur la couche de texture fibreuse 18' à découper.

Une fois la plaque formant gabarit de découpe correctement positionnée, la découpe de la couche de texture fibreuse 18' à proprement dite peut alors commencer. A cet effet, on pourra utiliser une lame de cutter 200 par exemple. Bien entendu, tout autre outil de coupe pourra être utilisé (mécanique, laser, etc.).

## Revendications

1. Dispositif (100) pour l'aide à la découpe d'une couche de texture fibreuse enroulée sur un mandrin d'imprégnation d'une machine d'enroulement, comprenant :
deux cales de positionnement (102) qui sont destinées à être chacune positionnées sur un flasque latéral (26) du mandrin d'imprégnation (16) ; et
une plaque (108) formant gabarit de découpe qui est positionnée sur les cales de positionnement et qui est destinée à être positionnée sur la couche de texture fibreuse (18') à découper, ladite plaque étant munie d'une fente (110) s'étendant en position entre les flasques latéraux du mandrin d'imprégnation et destinée à assurer un guidage d'un outil de coupe (200).

2. Dispositif selon la revendication 1, dans lequel les cales de positionnement (102) sont reliées entre elles par un film de protection (104) destiné à être positionné sous la couche de texture fibreuse à découper.

3. Dispositif selon la revendication 2, dans lequel le film de protection (104) est réalisé dans une matière plastique souple.

4. Dispositif selon la revendication 3, dans lequel le film de protection (104) est réalisé en polyamide et possède une épaisseur de l'ordre de 3mm environ.

5. Dispositif selon l'une quelconque des revendications 1 à 4, comportant en outre des moyens (106) de maintien en position des cales de positionnement (102) sur les flasques latéraux du mandrin d'imprégnation.

6. Dispositif selon l'une quelconque des revendications 1 à 5, dans lequel la plaque (108) est apte à être positionnée à chacune de ses extrémités sur les cales de positionnement.

7. Dispositif selon la revendication 6, comprenant en outre des moyens (112) de réglage de la position des extrémités de la plaque (108) sur les cales de positionnement.

8. Dispositif selon l'une quelconque des revendications 1 à 7, dans lequel les cales de positionnement (102) sont rigides.

9. Dispositif selon la revendication 8, dans lequel les cales de positionnement (102) sont réalisées en aluminium.

10. Machine d'enroulement (10) d'une texture fibreuse sur un mandrin d'imprégnation, comprenant :
un mandrin d'appel (14) sur lequel est destiné à être stockée une texture fibreuse (18) obtenue par tissage tridimensionnel, le mandrin d'appel ayant un axe de rotation (20) sensiblement horizontal ;
un mandrin d'imprégnation (16) sur lequel est destinée à être enroulée en couches superposées la texture fibreuse stockée sur le mandrin d'appel, le mandrin d'imprégnation ayant un axe de rotation (28) sensiblement horizontal et parallèle à l'axe de rotation du mandrin d'appel ;
au moins un moteur électrique (22, 30) pour entraîner en rotation les mandrins autour de leur axe de rotation respectif ;
une unité de commande (32) du ou des moteurs électriques d'entraînement en rotation des mandrins ; et
un dispositif (100) pour l'aide à la découpe d'une couche de la texture fibreuse selon l'une quelconque des revendications 1 à 9.

## Patentansprüche

1. Vorrichtung (100) zur Unterstützung des Schneidens einer Faserstrukturschicht, die auf einen Imprägnierungsdorn einer Wickelmaschine gewickelt ist, umfassend:
zwei Positionierungskeile (102), die dazu bestimmt sind, jeweils auf einem Seitenflansch (26) des Imprägnierungsdorns (16) positioniert zu werden, und
eine eine Schneidschablone bildende Platte (108), die auf den Positionierungskeilen positioniert ist und die dazu bestimmt ist, auf der zu schneidenden Faserstrukturschicht (18') positioniert zu werden, wobei die Platte mit einem Schlitz (110) versehen ist, der sich in Position zwischen den Seitenflanschen des Imprägnierungsdorns erstreckt und dazu bestimmt ist, ein Führen eines Schneidwerkzeugs (200) sicherzustellen.

2. Vorrichtung nach Anspruch 1, wobei die Positionierungskeile (102) durch eine Schutzfolie (104), die dazu bestimmt ist, unter der zu schneidenden Faserstrukturschicht positioniert zu werden, untereinander verbunden sind.

3. Vorrichtung nach Anspruch 2, wobei die Schutzfolie (104) aus einem flexiblen Kunststoff gefertigt ist.

4. Vorrichtung nach Anspruch 3, wobei die Schutzfolie (104) aus Polyamid gefertigt ist und eine Dicke in der Größenordnung von etwa 3 mm aufweist.

5. Vorrichtung nach einem der Ansprüche 1 bis 4, ferner umfassend Mittel (106), um die Positionierungskeile (102) auf den Seitenflanschen des Imprägnierungsdorns in Position zu halten.

6. Vorrichtung nach einem der Ansprüche 1 bis 5, wobei die Platte (108) geeignet ist, an jedem ihrer Enden auf den Positionierungskeilen positioniert zu werden.

7. Vorrichtung nach Anspruch 6, ferner umfassend Mittel (112) zum Einstellen der Position der Enden der Platte (108) auf den Positionierungskeilen.

8. Vorrichtung nach einem der Ansprüche 1 bis 7, wobei die Positionierungskeile (102) starr sind.

9. Vorrichtung nach Anspruch 8, wobei die Positionierungskeile (102) aus Aluminium gefertigt sind.

10. Maschine zum Aufwickeln (10) einer Faserstruktur auf einen Imprägnierungsdorn, umfassend:
einen Entnahmedorn (14), der dazu bestimmt ist, darauf eine durch dreidimensionales Weben erhaltene Faserstruktur (18) zu lagern, wobei der Entnahmedorn eine im Wesentlichen horizontale Rotationsachse (20) hat,
einen Imprägnierungsdorn (16), der dazu bestimmt ist, darauf die auf dem Entnahmedorn gelagerte Faserstruktur in übereinander liegenden Schichten aufzuwickeln, wobei der Imprägnierungsdorn eine Rotationsachse (28) aufweist, die im Wesentlichen horizontal ist und zu der Rotationsachse des Entnahmedorns parallel verläuft,
wenigstens einen Elektromotor (22, 30), um die Dorne um ihre jeweilige Rotationsachse drehanzutreiben,
eine Einheit zur Steuerung (32) des oder der Elektromotoren für den Drehantrieb der Dorne und
eine Vorrichtung (100) zur Unterstützung des Schneidens einer Schicht der Faserstruktur, nach einem der Ansprüche 1 bis 9.

## Claims

1. A device (100) for assisting in the cutting of a fiber texture layer wound on an impregnation mandrel of a winding machine, the device comprising:
two positioning stops (102), each designed to be positioned on a respective side plate (26) of the impregnation mandrel (16); and
a plate (108) forming a cutting jig that is designed to be positioned on the fiber texture layer (18') that is to be cut, said plate being provided with a slot (110) extending in position between the side plates of the impregnation mandrel and serving to guide a cutting tool (200).

2. A device according to claim 1, wherein the positioning stops (102) are connected to each other by a protective film (104) for positioning under the fiber texture layer that is to be cut.

3. A device according to claim 2, wherein the protective film (104) is made of a flexible plastics material.

4. A device according to claim 3, wherein the protective film (104) is made of polyamide and possesses a thickness of the order of about 3 mm.

5. A device according to any one of claims 1 to 4, further comprising means (106) for holding the positioning stops (102) in position on the side plates of the impregnation mandrel.

6. A device according to any one of claims 1 to 5, wherein the plate (108) is suitable for being positioned at each of its ends on the positioning stops.

7. A device according to claim 6, further comprising means (112) for adjusting the positions of the ends of the plate (108) on the positioning stops.

8. A device according to any one of claims 1 to 7, wherein the positioning stops (102) are rigid.

9. A device according to claim 8, wherein the positioning stops (102) are made of aluminum.

10. A winding machine (10) for winding a fiber texture onto an impregnation mandrel, the machine comprising:
a takeup mandrel (14) for the purpose of storing a fiber texture (18) obtained by three-dimensional weaving, the takeup mandrel having an axis of rotation (20) that is substantially horizontal;
an impregnation mandrel (16) onto which the fiber texture stored on the takeup mandrel is to be wound in superposed layers, the impregnation mandrel having an axis of rotation (28) that is substantially horizontal and parallel to the axis of rotation of the takeup mandrel;
at least one electric motor (22, 30) for driving the mandrels in rotation about their respective axes of rotation;
a control unit (32) for controlling the electric motor(s) for driving the mandrels in rotation; and
a device (100) for assisting in cutting a layer of the fiber texture according to any one of claims 1 to 9.
